# EUROPEAN PATENT APPLICATION

(11) **EP 4 796 827 A1**
(43) Date of publication of application: **26.08.2026**
(21) Application number: 24900227.0
(22) Date of filing: 22.08.2024
(51) Int. Cl.: F16L 59/02, C04B 38/00

(54) **THERMAL INSULATION MATERIAL**

(30) Priority: 07.12.2023 JP 2023207190
(71) Applicant: Krosakiharima Corporation, Kitakyushu-shi, Fukuoka 806-8586 (JP)
(72) Inventor: TSURUGA, Toshimitsu, Kitakyushu-shi, Fukuoka 806-8586 (JP); YAMASHITA, Shogo, Kitakyushu-shi, Fukuoka 806-8586 (JP); MORIKIYO, Yoshinori, Kitakyushu-shi, Fukuoka 806-8586 (JP); NAGAYOSHI, Atsushi, Kitakyushu-shi, Fukuoka 806-8586 (JP); FUKUI, Kazuki, Kitakyushu-shi, Fukuoka 806-8586 (JP); SHIBATA, Hisashi, Kitakyushu-shi, Fukuoka 806-8586 (JP); SASAYAMA, Hironobu, Kitakyushu-shi, Fukuoka 806-8586 (JP); NOBUHARA, Kaoru, Kitakyushu-shi, Fukuoka 806-8586 (JP)
(74) Representative: Vossius & Partner Patentanwälte Rechtsanwälte mbB
(86) International application number: PCT/JP2024/029738
(87) International publication number: WO 2025/120930

(57) **Abstract**

Provided is a thermal insulation material that exhibits excellent thermal insulation property at high temperatures, and has high strength and hardness. The thermal insulation material is obtained by molding a mixture containing 62 to 86% by mass of fumed silica, and 10 to 30% by mass of an infrared opaque material, wherein the thermal insulation material has: a pore distribution in which a modal diameter within a range of 70 nm or less is 20 nm or less; and a total number of pores of 3.5 × 10¹⁶ pores/g or more, wherein the thermal insulation material exhibits: a thermal conductivity at 800°C of 0.06 W/(m·K) or less; a compressive strength of 0.4 MPa or more; and a hardness of 75 or more.

## Description

### TECHNICAL FIELD

The present invention relates to a thermal insulation material.

### BACKGROUND ART

In the context of efforts toward carbon neutrality, there is a demand for improving thermal insulation property of thermal insulation materials, particularly their insulation property at high temperatures, in order to reduce heat loss in steelmaking furnaces and the like, enhance power generation efficiency of fuel cells, etc. On the other hand, in view of handleability during installation and assembly, compressive resistance against thermal expansion of contents during use at high temperatures, and vibration resistance during transportation and the like, thermal insulation materials are also required to have high strength and high hardness. Generally, thermal insulation property is in a trade-off relationship with strength or hardness, and it is difficult to satisfy both at the same time.

Heretofore, an ultrafine powder of silica such as fumed silica has been widely used as a raw material for thermal insulation materials. For example, Patent Document 1 discloses a technique of obtaining a silica molded body having good thermal insulation property and moldability by optimizing the powder properties of the ultrafine powder, the microstructure of the molded body, a molding method, and the like, in order to mold the ultrafine powder of silica by itself into a porous body.

### PRIOR ART DOCUMENTS

### [Patent Document]

Parent Document 1: JP 2007-169158 A

### SUMMARY OF INVENTION

### [Technical Problem]

In the technique disclosed in Patent Document 1, the ultrafine powder of silica is molded by itself. Thus, there is a concern that the thermal insulation property is liable to rapidly deteriorate at high temperatures (400°C or more), where the influence of radiation becomes significant. Specifically, the silica molded body (thermal insulation material) obtained by the technique disclosed in Patent Document 1 was problematic particularly in terms of thermal insulation property at high temperatures. Further, since the strength and hardness of the silica molded body (thermal insulation material) obtained by the technique disclosed in Patent Document 1 were premised on molding silica by itself, they could not be said to be sufficient in some cases when the molded body was formed from a mixture of silica and other raw materials. Moreover, the technique disclosed in Patent Document 1 does not at all assume that additives (such as fibers or an infrared opaque material) are mixed with the ultrafine powder of silica and that the resulting mixture is subjected to compression molding. Thus, it is presumed that moldability would deteriorate if such additives were mixed.

In view of the above, the technical problem to be solved by the present invention is to provide a thermal insulation material that exhibits excellent thermal insulation property at high temperatures, and has high strength and hardness.

### [Solution to Technical Problem]

According to one aspect of the present invention, the following thermal insulation material is provided.

"A thermal insulation material obtained by molding a mixture containing 62 to 86% by mass of fumed silica and 10 to 30% by mass of an infrared opaque material, wherein the thermal insulation material has: a pore distribution in which a modal diameter within a range of 70 nm or less is 20 nm or less; and a total number of pores of 3.5 × 10¹⁶ pores/g or more, wherein the thermal insulation material exhibits: a thermal conductivity at 800°C of 0.06 W/(m·K) or less; a compressive strength of 0.4 MPa or more; and a hardness of 75 or more."

### [Advantageous Effects of Invention]

According to the present invention, there can be obtained a thermal insulation material that exhibits excellent thermal insulation property at high temperatures, and has high strength and hardness.

### BRIEF DESCRIPTION OF THE DRAWINGS

FIG. 1 is a graph showing the pore distribution of a thermal insulation material according to the present invention (Inventive Example 1).
FIG. 2 is a graph showing the pore distribution of a thermal insulation material in Comparative Example 1.
FIG. 3 is a schematic diagram showing a production process of fumed silica.
FIG. 4 is a schematic diagram showing a difference in the structure of fumed silica.

### DESCRIPTION OF EMBODIMENTS

An embodiment of the present invention will now be described.

The mean free path of molecules in air at room temperature is about 70 nm. Thus, it is known that a porous body having pores with a diameter of 70 nm or less exhibits excellent thermal insulation property, because heat transfer attributable to air convection and conduction is suppressed within such a porous body. In the present invention, with a view to enabling a thermal insulation material to be significantly lowered in terms of thermal conductivity and significantly increased in terms of strength and hardness as compared to conventional thermal insulation materials, intensive studies were conducted with a focus on the pore distribution within the range of 70 nm or less in the porous body and the number of pores inside the thermal insulation material.

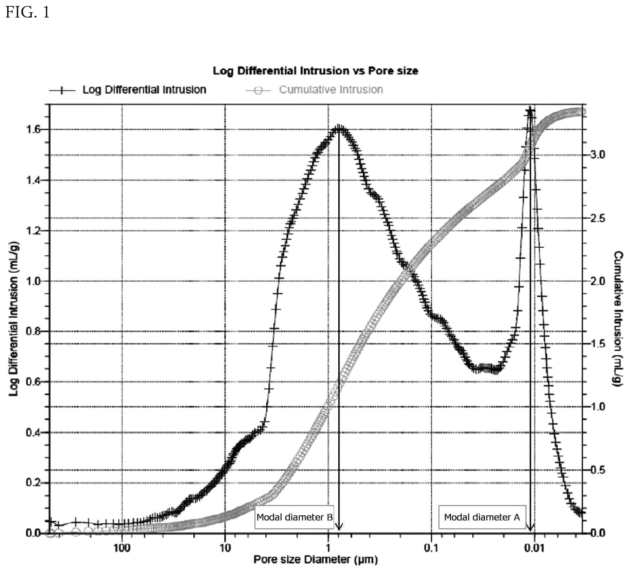

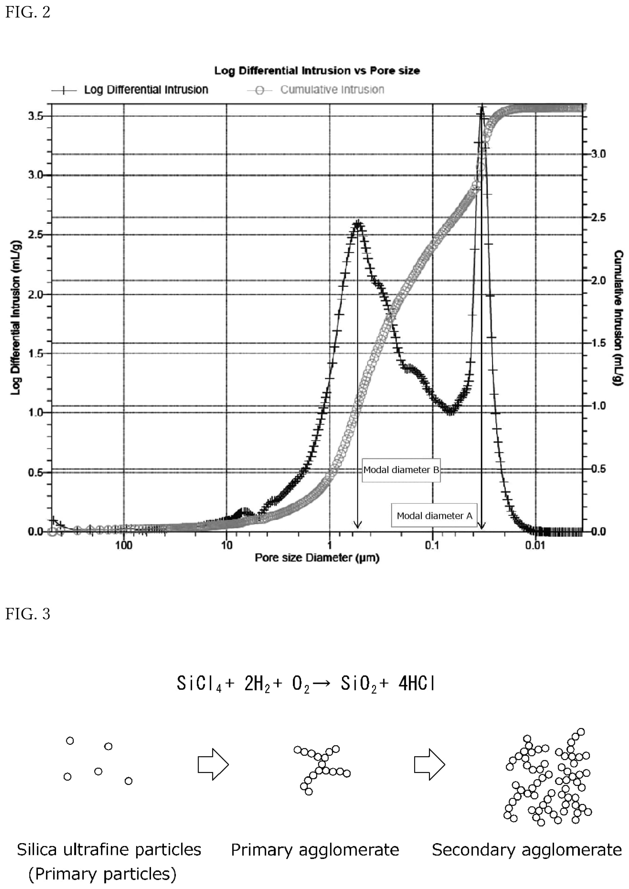

In the case of a thermal insulation material comprised of an ultrafine powder, the pore size distribution thereof is generally classified into the following three categories:
(1) 100 nm or less
   Pores surrounded by chain-like primary particles in a primary agglomerate (modal diameter A shown in FIGS. 1 and 2).
(2) 100 nm to 10 µm
   Pores formed in gaps among a plurality of primary agglomerates in a secondary agglomerate, or gaps among fibers (modal diameter B shown in FIGS. 1 and 2).
(3) 10 µm or more
   Relatively large spaces formed by gaps among a plurality of secondary agglomerates, and/or defects, cracks, or the like in a molded body (there are no such relatively large spaces in the case of the specimens shown in FIGS. 1 and 2).

Fumed silica used as a main raw material for a thermal insulation material according to the present invention is a material having a high degree of purity and a high heat resistance withstanding a temperature of 800°C or more, and is obtained by combusting silicon tetrachloride with oxygen and hydrogen in a flame (at 1000°C or more) to generate ultrafine particles of silica (flame hydrolysis method), as schematically shown in FIG. 3. Each primary particle (having a particle size of about 5 to 30 nm) bonds with one or more other primary particles in a flame to form a primary agglomerate (having a particle size of about 100 to 400 nm) having a complicated chain-like structure. It is difficult to break up the primary agglomerate into the primary particles, and thus the primary agglomerate constitutes a substantially minimum unit as a powder. The present inventors have found that, by making the pore size (modal diameter) within a range of 70 nm or less in the pore size distribution of the primary agglomerate as small as possible, and further by increasing the number of pores formed as a result of entanglement in the chain-like structure of the agglomerate, gaps among a plurality of the agglomerates, and the like, it becomes possible to enable a thermal insulation material to be lowered in terms of thermal conductivity and increased in terms of strength and hardness as compared to conventional thermal insulation materials.

Making the pore size of the primary agglomerate as small as possible can be realized, for example, by increasing the specific surface area of fumed silica so as to reduce the size of the primary particles. Examples of the way to reduce the size of the primary particles include adjusting production conditions such as the supply amount of silicon tetrachloride and the duration of the combustion, to cause the primary particles to bond before they grow, thereby forming the primary agglomerate. Since the pore size of the primary agglomerate formed of primary particles whose size has been reduced becomes smaller, the modal diameter in the pore size distribution also becomes smaller. Further, the complexity of the chain-like structure of the primary agglomerate (such as: the number of branches and the length of the chain (structure); and the surface properties (such as the number of surface silanol groups)) is also considered to exert an influence on the pore size and the number of pores. Thus, it is considered that the thermal insulation property, strength, and hardness of the thermal insulation material is determined by a combination of these factors.

It is presumed that making the modal diameter within the range of 70 nm or less in the pore size distribution as small as possible contributes to reduction in the thermal conductivity of a thermal insulation material for the following reason. Although referred to as pores, the pores are spaces loosely defined by the chain-like primary particles in the primary agglomerate. Thus, the pore size partially changes due to molecular motions such as vibration, rotation, translation, contraction, and elongation, and thus it is impossible to completely suppress heat transfer by gas molecules. Thus, it is considered that as the pore size (modal diameter) is set to be smaller (particularly to 20 nm or less), it becomes less than the mean free path of molecules in air even if the pore size varies slightly, thereby contributing to the suppression of the heat transfer by gas molecules.

Further, when the primary agglomerate is physically bonded to other primary agglomerates by van der Waals forces, a secondary agglomerate (having a particle diameter of approximately 10 to 50 µm) is formed. Since the bonding force of the secondary agglomerate is relatively weak, the secondary agglomerate can be broken up and dispersed by applying a strong shearing force or the like thereto, and re-formed as the primary agglomerates. However, such primary agglomerates are prone to reagglomeration. Therefore, it is difficult to completely exclude pores of 100 nm or more that are mainly formed in the secondary agglomerate. In view of the above, it is effective to further enlarge and complicate the chain-like structure of the primary agglomerate, thereby increasing the number of pores in the primary agglomerate or the secondary agglomerate. This results in an increase in the number of space-defining partitions formed by the chain-like primary particles, which makes it possible to more effectively suppress heat transfer attributable to air convection and conduction, and improve thermal insulation property. Further, as the number of the partitions increases, the density of pores becomes higher, and the number of point contacts among particles increases, thereby providing structurally enhanced hardness and strength.

Under the above-mentioned technical considerations, the present invention has achieved reduction in the thermal conductivity and increase in the strength and hardness of a thermal insulation material by adopting the following features. That is, a thermal insulation material according to the present invention is obtained by molding a mixture containing 62 to 86% by mass of fumed silica for creating micropores and 10 to 30% by mass of an infrared opaque material for reflecting radiant heat in a high-temperature region, wherein the thermal insulation material is an ultramicroporous material having: a pore distribution in which a modal diameter within a range of 70 nm or less is 20 nm or less; and a total number of pores of 3.5 × 10¹⁶ pores/g or more. This makes it possible to obtain a thermal insulation material exhibiting: a thermal conductivity at 800°C of 0.06 W/(m·K) or less; a compressive strength of 0.4 MPa or more; and a hardness of 75 or more.

With regard to the content rate of each raw material in the mixture, from a viewpoint of reduction in the thermal conductivity and increase in the strength and hardness of the thermal insulation material, it is preferable that the content rate of the fumed silica is 70 to 86% by mass, and the content rate of the infrared opaque material is 10 to 25% by mass,

Here, in the present invention, the term "mixture" means a material obtained by mixing raw materials of the thermal insulation material with the below-mentioned binder, and the content rate of each raw material of the mixture means a percentage with respect to 100% by mass of the total amount of the raw materials of the thermal insulation material and the solid content of the binder.

Further, in the present invention, the modal diameter within the range of 70 nm or less in the pore distribution may be set to 16 nm or less, and the total number of pores may be set to 4.5 × 10¹⁶ pores/g or more. In this case, it is possible to obtain a thermal insulation material having a thermal conductivity at 800°C of 0.055 W/(m·K) or less.

In the present invention, the thermal conductivity is measured by a hot wire method, specifically in accordance with JIS R 2251-1.

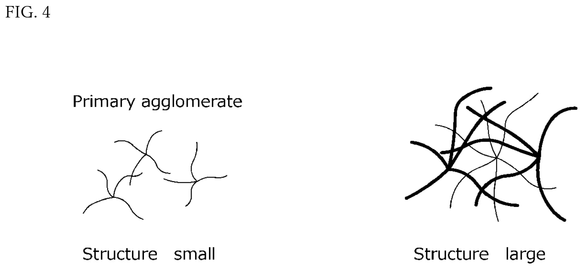

In the present invention, fumed silica used as a main raw material of the thermal insulation material preferably has a DBP (dibutyl phthalate) absorption amount of 370 mL/100 g or more, more preferably 390 mL/100 g or more. The magnitude of the DBP absorption amount corresponds to the magnitude of the structure of fumed silica. The term "structure" means a chain-like or branched structure formed by the connection of a plurality of primary particles, and relates to the size, structural broadening, etc., of the primary agglomerate. It is considered that in a case where the structure is large (long), the number of entanglements in the chain-like structures of the primary agglomerate increases, as shown in FIG. 4, which leads to reduction in mean pore diameter and increase in the number of pores. This contributes to improvements in the thermal insulation property, strength, and hardness of the thermal insulation material, as mentioned above. Therefore, control of the structure is considered to be effective for adjusting such an agglomeration structure.

Further, fumed silica preferably has the specific surface area (BET (Brunauer-Emmett-Teller) method, N₂ adsorption: BET) of 300 to 500 m²/g, more preferably 400 to 450 m²/g. As described above, a larger specific surface area more effectively facilitates reduction in thermal conductivity and also increase in hardness and strength. That is, when the specific surface area is small, the pore size becomes larger, and thus thermal conductivity becomes higher. However, if the specific surface area is excessively large, there is a concern that strong cohesive forces make dispersion of the agglomerates difficult, and smaller primary particles tend to promote sintering, resulting in deteriorated heat resistance. In order to suppress sintering to improve heat resistance, etc., the mixture may further contain fumed alumina, precipitated alumina, or the like.

In thermal insulation under high temperatures (400°C or more), heat transfer by radiation becomes significantly greater than heat transfer by heat conduction or convection. Thus, reduction of radiation is effective as a means to suppress heat transfer under high temperatures. For this reason, in the present invention, the mixture contains an infrared opaque material as a material that reflects infrared radiation, absorbs infrared radiation, or otherwise acts on infrared radiation in a similar manner. As the infrared opaque material, it is possible to use a material having a high refractive index, such as silicon carbide, iron oxide, zirconium silicate, or titanium oxide. In order to efficiently reflect radiant heat, in consideration of the infrared wavelength, a mean particle size (D50) of the infrared opaque material is preferably set to 1 to 5 µm, more preferably 2 to 4 µm. Further, in shielding of infrared radiation, the content rate and dispersibility of the infrared opaque material in the mixture are also important, and it is preferable that the content rate of the infrared opaque material is set in the range of 10 to 30% by mass, and the infrared opaque material is mixed with the fumed silica and broken up as finely as possible through collision therebetween, etc., by using a mixer or the like, thereby facilitating dispersion and mixing. If the content rate of the infrared opaque material is less than 10% by mass, heat transfer by radiation increases, resulting in a higher thermal conductivity. On the other hand, if the content rate of the infrared opaque material is greater than 30% by mass, the content rate of the fumed silica decreases, leading to coarsening of pores, resulting not only in deteriorated strength and hardness but also in increased thermal conductivity.

Further, in order to improve shape-retaining property of the thermal insulation material as a molded body, the mixture may contain inorganic fibers. The inorganic fibers are fibers comprised of an inorganic material, and examples thereof may include silica fibers, glass fibers, and alumina fibers. In consideration of heat resistance property and cost, it is preferable to use silica fibers (the content rate of SiO₂: 95% by mass or more). From a viewpoint of moldability and processability, the content rate of the inorganic fibers in the mixture is preferably 1 to 10% by mass, more preferably 2 to 5% by mass. With regard to the shape of the inorganic fibers, the inorganic fibers preferably have a mean fiber diameter of 4 to 12 µm, and a mean fiber length of 3 to 10 mm. More preferably, the inorganic fibers have a mean fiber diameter of 5 to 9 µm, and a mean fiber length of 5 to 8 mm.

A higher bulk density of the thermal insulation material makes it possible to obtain higher hardness and strength. However, if the bulk density is excessively high, the thermal insulation property are likely to deteriorate, and if it is excessively low, the strength is likely to deteriorate. Thus, the bulk density is preferably 240 to 350 kg/m³, more preferably 260 to 310 kg/m³.

The thermal insulation material according to the present invention can be obtained by a production method comprising the following steps.
(1) A mixing step of dry-mixing raw materials of the thermal insulation material, i.e., fumed silica, an infrared opaque material, inorganic fibers, and the like, in a mixer, and further dry-mixing them in the mixer while spraying an inorganic binder (such as a colloidal silica solution) thereon, to prepare a powdery mixture.
(2) A molding step of subjecting the mixture obtained in the mixing step to dry uniaxial pressure molding using a press molding machine having upper and lower press members provided with a large number of ventholes.

In the above-mentioned mixing step, fumed silica having a large specific surface area and a large structure is sufficiently broken up, dispersed, and mixed. This makes it possible to make the pore size smaller and increase the number of pores. As a result, the thermal conductivity is reduced, and the strength and hardness are also improved. In addition, since the infrared opaque material having a high infrared shielding effect is simultaneously sufficiently broken up, dispersed, and mixed, high thermal insulation property can be obtained even at high temperatures.

The mixer used in the mixing step is not particularly limited, as long as it has appropriate shearing force, impact force, and the like sufficient to break up a powder (in particular, agglomerate). For example, a Henschel Mixer, a Super Mixer, or a Spartan Mixer may be used. With regard to the shape of blades used in the mixer, an appropriate shape may be selected as long as it is capable of generating a high shearing force.

The thermal insulation material according to the present invention can be produced without including a heating step of heating a molded body obtained in the above-mentioned molding step. This enables production with a short takt time, and eliminates the need for heating equipment. Thus, since both the initial cost and the running cost can be kept down, the overall production cost can be reduced. Further, since CO₂ emissions during production can be kept low, the present invention also contributes to carbon neutrality.

As described above, the production method for the thermal insulation material according to the present invention can eliminate the need for post-treatment such as heat treatment. Thus, despite the low cost and simple production with a short takt time, it is possible to obtain a thermal insulation material having high heat resistance, low thermal conductivity, and high strength.

The thermal insulation material according to the present invention are not limited to specific applications, and may be used for thermal insulation in: steelmaking furnaces such as ladles, torpedo cars, and tundishes; rolling furnaces such as soaking furnaces and heating furnaces; heat treatment furnaces such as carburizing furnaces, metal sintering furnaces, and induction treatment furnaces; nonferrous metal furnaces such as melting furnaces and fuel heating furnaces; ceramic kilns such as glass melting furnaces, cement firing furnaces, and refractory firing furnaces; and high-temperature portions such as a portion between cells or modules of a secondary battery, and a reformer and a cell stack of a fuel cell.

### EXAMPLES

Table 1 shows respective raw material compositions in Inventive Examples and Comparative Examples, and physical property values of respective thermal insulation materials obtained therefrom.

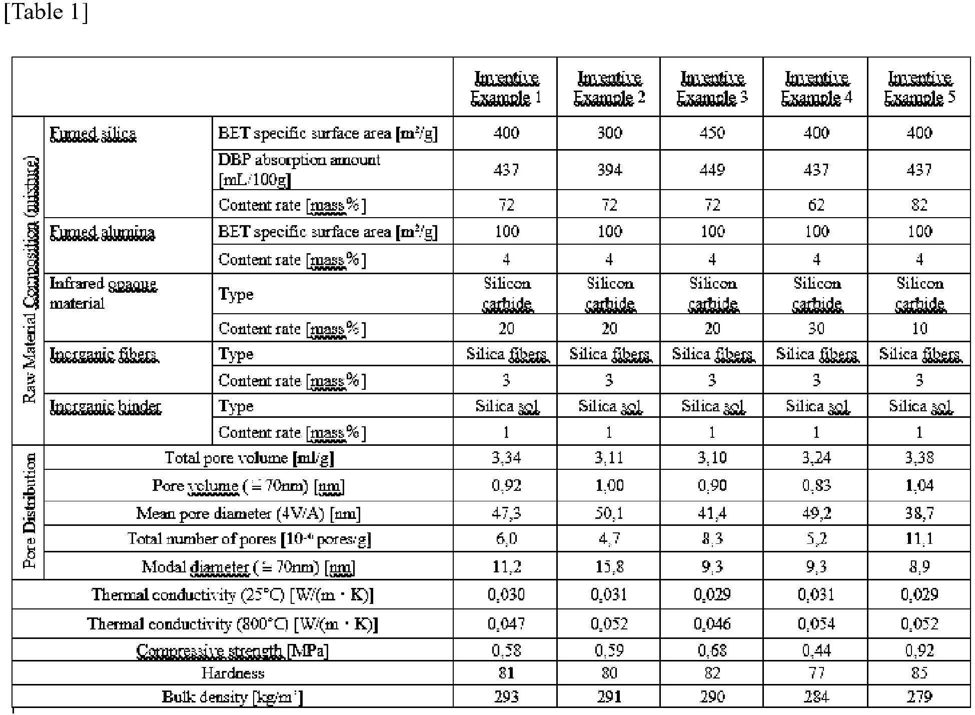

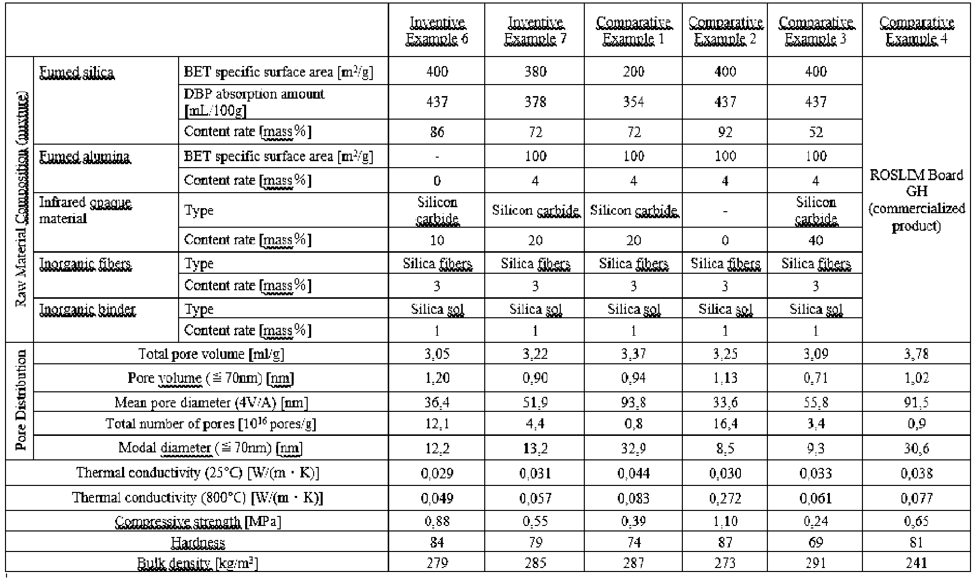

Measurement methods of respective physical property value shown in Table 1 are as follows. It should be noted that the measurements were conducted at room temperature (about 20 to 25°C) unless otherwise specified. [DBP Absorption Amount (Oil Absorption Amount) of Fumed Silica]

The DBP (dibutyl phthalate) absorption amount (oil absorption amount) of fumed silica, which is a raw material of the thermal insulation material, was measured using an absorption amount measuring device (S410E manufactured by Asahisouken Corporation; compliant with JIS K 6217-4). Specifically, under the condition that the oil dropping rate was set to 4 mL/min, the amount of DBP dropped (mL) at a timing when mixing torque reaches 70% of its maximum torque was calculated, and converted to a value per 100 g of a specimen to obtain the DBP absorption amount (mL/100 g).

### [Pore Distribution]

The pore distribution of the thermal insulation material was measured using a mercury porosimeter (Autopore IV 9520 manufactured by Micromeritics) based on JIS R 1655. A specimen was processed to a size (length, width, and thickness) that could be put into a holder (each of the length, width, and thickness was 10 mm or less), and the measurement conditions were set such that the surface tension was 0.480 N/m and the contact angle was 140°. The measurement range was set to 0.004 to 500 µm, and a pore size at a peak appearing within a range of 70 nm or less in a logarithmic differential pore volume distribution (dV/d(log D)) was defined as a "modal diameter within a range of 70 nm or less in a pore distribution" (hereinafter referred to as "modal diameter (≤ 70 nm)"). With regard to the total number of pores (pores/g), on the assumption that the shape of each pore is represented as a sphere, a volume per pore (mL/pore) was determined from a mean pore diameter (4V/A) obtained by the measurement with the mercury porosimeter, using the formula for the volume of a sphere (4/3 × π × (radius)³), and then the total number of pores was determined by dividing the total pore volume (mL/g) by the volume per pore.

### [Thermal Conductivity]

The thermal conductivity (W/(m·K)) of the thermal insulation material was measured using a thermal conductivity measuring device based on a hot wire method (orthogonal method) (HWM-15 manufactured by SpeinLab Co., Ltd.; compliant with JIS R 2251-1). The measurement atmosphere was atmospheric air, and the temperature was set to room temperature (25°C) or 800°C. A specimen had a size of 230 mm in length, 114 mm in width, and 20 mm in thickness, and was used in pairs.

### [Compressive Strength]

The compressive strength of the thermal insulation material was measured using an Autograph manufactured by Shimadzu Corporation. A specimen had a size of 50 mm in length, 50 mm in width, and 20 mm in thickness, and the compression speed was set to 0.5 mm/min. In this case, a value derived from dividing a test force (N) at a time point when the specimen was compressed by 10% from the initial thickness by the area (mm²) of a compressive surface of the specimen was taken as the compressive strength (MPa).

### [Hardness]

The hardness of the thermal insulation material was measured using a durometer (Type C, compliant with JIS K 7312 / JIS S 6050). A specimen had a size of 50 mm in length, 50 mm in width, and 20 mm in thickness. The hardness was measured at arbitrary five points of the specimen, and the mean value of the measurements was calculated.

### [Bulk Density]

The bulk density (kg/m³) of the thermal insulation material was determined by measuring the dimensions and mass of the specimen used for the thermal conductivity measurement, and dividing the measured mass by a volume derived from the measured dimensions.

In Inventive Example 1, a thermal insulation material was experimentally produced in the following manner.

As raw materials for the thermal insulation material, 2.88 kg (72% by mass) of fumed silica (BET specific surface area: 400 m²/g; DBP absorption amount: 437 mL/100 g), 0.16 kg (4% by mass) of fumed alumina (BET specific surface area: 100 m²/g), 0.8 kg (20% by mass) of an infrared opaque material (silicon carbide (mean particle size (D50): about 3 µm)), and 0.12 kg (3% by mass) of inorganic fibers (silica fibers (mean fiber diameter: about 7 µm; mean fiber length: about 6 mm)) were prepared. Further, as a binder, 0.133 kg (1% by mass (solid content)) of a colloidal silica (silica sol) solution (solid content: 30% by mass) was prepared (the total amount of the raw materials and the binder solid content: 4 kg).

First, the entire amounts of the fumed silica, the fumed alumina, the infrared opaque material, and the inorganic fibers were dry-mixed in a Henschel mixer (rotational speed: about 3000 rpm) for 14 minutes. Subsequently, while the entire amount of the binder was added to the resulting mixture by spraying through a spray nozzle, dry-mixing was continued in the mixer (under the same conditions as described above) for 6 minutes, thereby obtaining a powdery mixture (total mixing time: 20 minutes).

Then, a mesh was set on the bottom side of a press surface of a metal frame in a press molding machine, and after charging about 0.92 kg of the mixture, another mesh was also set on the top side. The mixture was then subjected to dry uniaxial press molding for 1 minute while performing degassing under a molding pressure of about 1 MPa by upper and lower press members provided with a large number of ventholes, thereby obtaining a raw plate of a thermal insulation material specimen (length: 400 mm, width: 300 mm, thickness: 26 mm).

Subsequently, the surface of the raw plate was smoothed by milling using a machining center, and after reducing the thickness thereof to 20 mm, the resulting raw plate was cut into given dimensions to obtain each specimen.

In each of Inventive Examples 2 to 7 and Comparative Examples 1 to 3, a thermal insulation material was also experimentally produced, and specimens for the above measurements were obtained, in the same manner as in Inventive Example 1. The difference between Inventive Example 1 and each of Inventive Examples 2 to 7 and Comparative Examples 1 to 3 is as follows.

In Inventive Example 2, as the fumed silica, one having a BET specific surface area of 300 m²/g and a DBP absorption amount of 394 mL/100 g was used.

In Inventive Example 3, as the fumed silica, one having a BET specific surface area of 450 m²/g and a DBP absorption amount of 449 mL/100 g was used.

In Inventive Example 4, the content rate of the fumed silica and the content rate of the infrared opaque material were set to 62% by mass and 30% by mass, respectively.

In Inventive Example 5, the content rate of the fumed silica and the content rate of the infrared opaque material were set to 82% by mass and 10% by mass, respectively.

In Inventive Example 6, the content rate of the fumed silica, the content rate of fumed alumina, and the content rate of the infrared opaque material were set to 86% by mass, 0% by mass, and 10% by mass, respectively.

In Inventive Example 7, as the fumed silica, one having a BET specific surface area of 380 m²/g and a DBP absorption amount of 378 mL/100 g was used.

In Comparative Example 1, as the fumed silica, one having a BET specific surface area of 200 m²/g and a DBP absorption amount of 354 mL/100 g was used.

In Comparative Example 2, the content rate of the fumed silica and the content rate of the infrared opaque material were set to 92% by mass and 0% by mass, respectively.

In Comparative Example 3, the content rate of the fumed silica and the content rate of the infrared opaque material were set to 52% by mass and 40% by mass, respectively.

On the other hand, in Comparative Example 4, a raw plate (length: 500 mm, width: 500 mm, thickness: 25 mm) of ROSLIM Board GH ("ROSLIM" is a registered trademark), which is a commercially available silica-based thermal insulation material manufactured by NICHIAS Corporation, was smoothed by milling using a machining center, and after reducing the thickness thereof to 20 mm, the resulting raw plate was cut into given dimensions to obtain each specimen.

Table 1 shows the measurement results of the respective physical property values in Inventive Examples 1 to 7 and Comparative Examples 1 to 4. Further, Table 2 shows the reduction rate of thermal conductivity in each of Inventive Examples 1 to 7 with respect to each of Comparative Examples 1 to 4 (percentage of a value obtained by dividing the thermal conductivity in each Inventive Example by the thermal conductivity in each Comparative Example and subtracting 1 from the resulting quotient).

**[Table 2]**

| | | Inventive Example 1 | Inventive Example 2 | Inventive Example 3 | Inventive Example 4 | Inventive Example 5 | Inventive Example 6 | Inventive Example 7 |
|---|---|---|---|---|---|---|---|---|
| Thermal conductivity (800°C) [W/(m · K)] | | 0,047 | 0,052 | 0,046 | 0,054 | 0,052 | 0,049 | 0,057 |
| | Ratio with respect to Comparative Example 1 | -43% | -37% | -45% | -35% | -37% | -41% | -31% |
| | Ratio with respect to Comparative Example 2 | -83% | -81% | -83% | -80% | -81% | -82% | -79% |
| | Ratio with respect to Comparative Example 3 | -23% | -15% | -25% | -11% | -15% | -20% | -7% |
| | Ratio with respect to Comparative Example 4 | -39% | -32% | -40% | -30% | -32% | -36% | -26% |

As shown in Table 1, in Inventive Example 1, a thermal insulation material having a modal diameter (≤ 70 nm) of 11.2 nm, a total number of pores of 6.0×10¹⁶ pores /g, a thermal conductivity (800°C) of 0.047 W/(m·K), a compressive strength of 0.58 MPa, and a hardness of 81 was obtained. Further, when compared with Comparative Examples 1 to 4, as shown in Table 2, a significant reduction in thermal conductivity (800°C) of 23 to 83% was observed. In addition, despite such high thermal insulation performance, both compressive strength and hardness were high, and handleability was better than that of the thermal insulation materials of Comparative Examples 1 and 3. In the thermal insulation materials of Comparative Examples 1 and 3, crumbling, chipping, or the like was observed during molding or during handling of the thermal insulation material specimens. In Inventive Example 1, it is presumed that the pore size in the primary agglomerate became smaller and the number of pores became larger due to the fumed silica having a high specific surface area and a large structure. Thus, the modal diameter (≤ 70 nm) was further reduced as compared with the conventional art and commercially available products. In addition, it is considered that, since the total number of pores became 7.5 times that of Comparative Example 1, thermal insulation performance, compressive strength, and hardness were improved even though the total pore volume and the pore volume within the range of 70 nm or less in the pore distribution (pore volume (≤ 70 nm)) were comparable to those of Comparative Example 1.

In Inventive Examples 2 to 7, thermal insulation materials having a modal diameter (≤ 70 nm) of 8.9 to 15.8 nm, a total pore number of 4.4 to 12.1 × 10¹⁶ pores/g, a thermal conductivity (800 °C) of 0.046 to 0.057 W/(m·K), a compressive strength of 0.44 to 0.92 MPa, and a hardness of 77 to 85 were also obtained. Similarly to Inventive Example 1, superior differences over Comparative Examples 1 to 4 could be obtained, and both high thermal insulation performance and high compressive strength and hardness could be simultaneously achieved.

## Claims

1. A thermal insulation material obtained by molding a mixture containing 62 to 86% by mass of fumed silica and 10 to 30% by mass of an infrared opaque material,
wherein the thermal insulation material has: a pore distribution in which a modal diameter within a range of 70 nm or less is 20 nm or less; and a total number of pores of 3.5 × 10¹⁶ pores/g or more,
wherein the thermal insulation material exhibits: a thermal conductivity at 800°C of 0.06 W/(m·K) or less; a compressive strength of 0.4 MPa or more; and a hardness of 75 or more.

2. The thermal insulation material as claimed in claim 1, wherein the fumed silica has a DBP absorption amount of 370 mL/100 g or more.

3. The thermal insulation material as claimed in claim 1 or 2, wherein the fumed silica has a BET specific surface area of 300 to 500 m²/g.

4. The thermal insulation material as claimed in claim 1, wherein the modal diameter within the range of 70 nm or less in the pore distribution is 16 nm or less, and the total number of pores is 4.5 × 10¹⁶ pores/g or more, and wherein the fumed silica has a DBP absorption amount of 390 mL/100 g or more, wherein the thermal conductivity at 800°C is 0.055 W/(m·K) or less.
